# EUROPÄISCHE PATENTSCHRIFT

(11) **EP 1 376 363 B1**
(45) Veröffentlichungstag und Bekanntmachung des Hinweises auf die Patenterteilung: **23.11.2016**
(21) Anmeldenummer: 03013516.4
(22) Anmeldetag: 13.06.2003
(51) Int. Cl.: G06F 11/30, H04L 12/26

(54) **Verfahren und Vorrichtung zum Monitoring/Controlling von Qualitätsvereinbarungen**
Method and device for monitoring/controlling of quality of service
Procédé et dispositif pour la contrôle/surveillance de la qualité de service

(30) Priorität: 15.06.2002 DE 10226864
(43) Veröffentlichungstag der Anmeldung: 02.01.2004
(73) Patentinhaber: Noll, Uwe, 78736 Epfendorf (DE); Drach, Valeriy, Brooklyn, NY 11226 (US)
(72) Erfinder: Noll, Uwe, 78736 Epfendorf (DE); Drach, Valeriy, Brooklyn, NY 11226 (US)
(74) Vertreter: Straube, Urs Norman

(56) Entgegenhaltungen:
- US-A- 5 285 494
- US-B1- 6 320 585

## Beschreibung

Die Erfindung betrifft eine Zusatzanmeldung zu einem Verfahren und zu einer Vorrichtung zur Darstellung und Auswertung von Störinformationen und Entstörinformationen, die in einer Datenbank, einer sog. Stöbe-N Datenbank, abgelegt sind, gemäß der Anmeldung DE 10226864.9.

Unternehmen der Telekommunikationsindustrie führen regelmäßig Untersuchungen durch, um zu erkennen, welche Netzwerksegmente mit welchen Produkten Fehler erzeugen und wie schnell diese Fehler behoben werden können. Solche Informationen werden in einer Datenbank, die regelmäßig in Form eines flachen Files abgespeichert wird, abgelegt. Tools, die in der Lage sind, diese Informationen auszuwerten, sind auf dem Markt nicht erhältlich.

Beispielsweise offenbart die US 5,285,494 ein Netzwerkverwaltungssystem. Dabei werden in einer Datenbank Datenstrukturen aufgrund von Zeitangaben selektiert und dann in dieser Datenbank sortiert. In einem weiteren Schritt werden dann die sortierten Datenstrukturen durchsucht, um Datenstrukturen zu finden, die nicht innerhalb eines vorgegebenen Zeitfensters entstört wurden.

Aufgabe der Erfindung ist es, eine Auswerteeinrichtung bereitzustellen, die eine Analyse der flach abgespeicherten Daten erlaubt.

Die Erfindung ermöglicht die Analyse von Entstörungsdatenrekords aus der Stöbe-N Datenbank hinsichtlich der ZB-NI Qualitätsvereinbarungen.

Hierbei werden die QNM-Entstörungsrekords nach Zeitkriterien selektiert und mit Produktgruppen verbunden, wobei eine Trennung der Störungsrekords nach "IN-Frist" und "Nicht IN-Frist" realisiert wird. Außerdem werden die errechneten Qualitätsindexe in jedem gewünschten Zeitabschnitt automatisch gehalten. Die Erstellung von Produktsegmenten und die Haltung der errechneten Kennzahlen in Analysezeiträumen ist somit möglich geworden. Hierbei ist die Verarbeitung von sich regelmäßig wiederholenden Entstörungsdatenzeitabschnitten besonders vorteilhaft, da sich der Qualitätsentstörungsindex anschließend in Zeitreihen darstellen lässt.

Die vorliegende Zusatzanmeldung berücksichtigt, dass der Auslastungsgrad der Vermittlungsstellen mit in die Entstörstatistik einfließt. Störungen liegen immer dann vor, wenn die Auslastung einen bestimmten Schwellwert übersteigt. Diese Auslastung kann sowohl dynamisch als auch statisch bestimmt werden.

Der statische Auslastungsgrad bestimmt sich aus dem Quotienten von belegten Ports zu den gesamten Ports eines SDH-Gerätes.

Der dynamische Auslastungsgrad bildet sich aus dem Verhältnis von Auslastungen der belegten Ports zu allen belegten Ports. Sollte der dynamische Auslastungsgrad einen bestimmten Grenzwert überschreiten, dann muss es zu einer Erweiterung im System durch Einschieben zusätzlicher Karten kommen. Weiterhin gibt es die Möglichkeit, den Grenzwert für die Auslastung mit einem zusätzlichen Zeitfenster Faktor zu belegen. Hierdurch kann eine Erweiterung erst dann notwendig sein, wenn über einen bestimmten Zeitraum die Auslastung über dem vorgegebenen Grenzwert liegt.

Wenn hingegen der statische Auslastungsgrad einen bestimmten Grenzwert überschreitet, dann muss es zu einer Erweiterung des Gesamtsystems kommen. Das heißt, es müssen zusätzliche Netzwerkstränge aufgezogen werden.

Auf der Basis des Auslastungsgrads eines Netzwerkknotens kann die Auslastung eines ganzen Netzwerkes bestimmt werden. Hierbei wird auf die Normalisierung zurückgegriffen. Es erfolgt der Einsatz der Normalisierung mit dem Maximalwert, wodurch unterschiedliche Dimensionen vergleichbar werden. Es ist selbstverständlich, dass nach der Normalisierung eine beliebige Streckung der zu vergleichenden Prozessdimensionen mit einem gemeinsamen Faktor vorgenommen werden darf. Dies wird bei weiteren mathematischen Verarbeitungsschritten sogar bevorzugt angestrebt, um die Rechenungenauigkeit in der Nachkommastellenverarbeitung zu minimieren. Der Quotient aus den belegten Ports und der gesamten Anzahl der vorhandenen Ports in Bezug auf eine Dimension/Einheit ermöglicht es, den Belegungsgrad zu bestimmen. Hierbei spiegelt die geeignete Zusammenfassung der Werte den jeweiligen gewünschten Belegungsgrad wider.

Hierdurch ist eine erhebliche Verbesserung der Dokumentationen eines Netzes möglich, wodurch eine vollständige und einheitliche Dokumentation der WDM/SDH-Verbindungen (auch Raumbedarfsplanung hinsichtlich Stellfläche zwecks Neuanmietung) sowie die für moderne Netzelemente unverzichtbare Darstellung des Auslastungsgrades erfolgen kann. Eine vollständige Netzdokumentation ist Voraussetzung dafür, dass Netze betrieben werden können und Kunden termingerecht Produkte bereitgestellt werden können. Die Analyse erleichtert nicht nur die Bearbeitung von Ü-Wegschaltungen, sondern sie führt auch zu Verbesserungen der Störungsbearbeitung. Diese Vorteile resultieren auch aus dem Einsatz der Normalisierung mit dem konkreten Maximal-Wert hinsichtlich jeder Dimension, wodurch unterschiedliche Dimensionen vergleichbar werden, indem der Quotient aus den belegten Einheiten (z. B. Ports) zu der Gesamtanzahl der vorhandenen Einheiten (z. B. Ports) in Bezug auf eine Dimension/Einheit den Auslastungsgrad wiedergeben und die geeignete Zusammenfassung der Werte in Bezug auf die gewünschten Gesamteinheiten den jeweils gewünschten Auslastungsgrad in jeder beliebigen "Drill-Down" Hierarchie widerspiegelt. In statischen SDH-/WDM Datenbank-Tabellen, werden die Prozessattribute [Technik], [Gerät], [Land], [Pop], [Herstellerfirma], [Implementierungsdatum], [Gesamt-Ports], [belegte Ports], [Auslastung der belegten Ports],

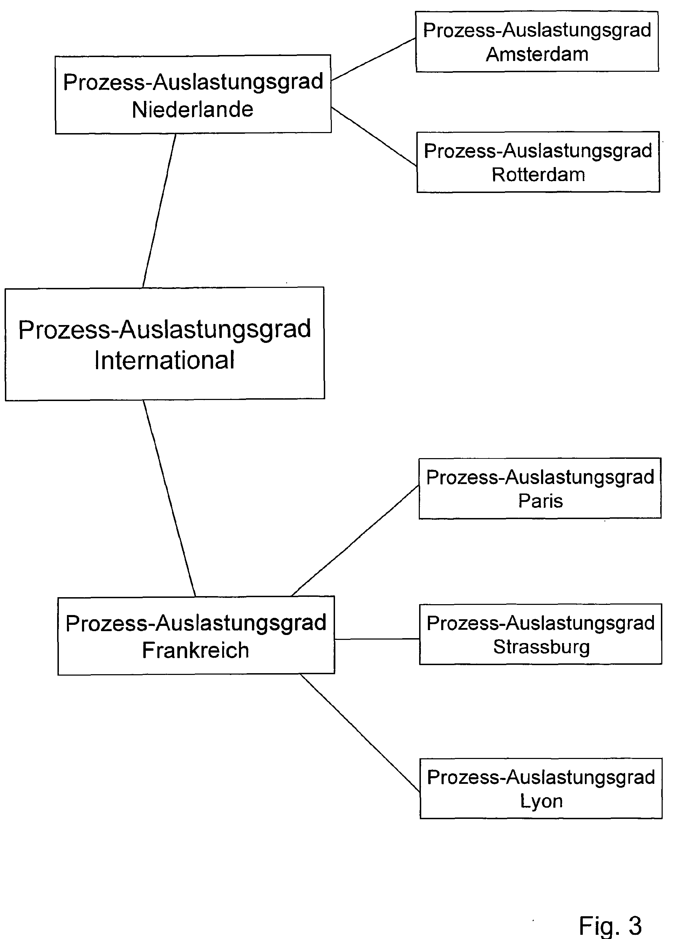

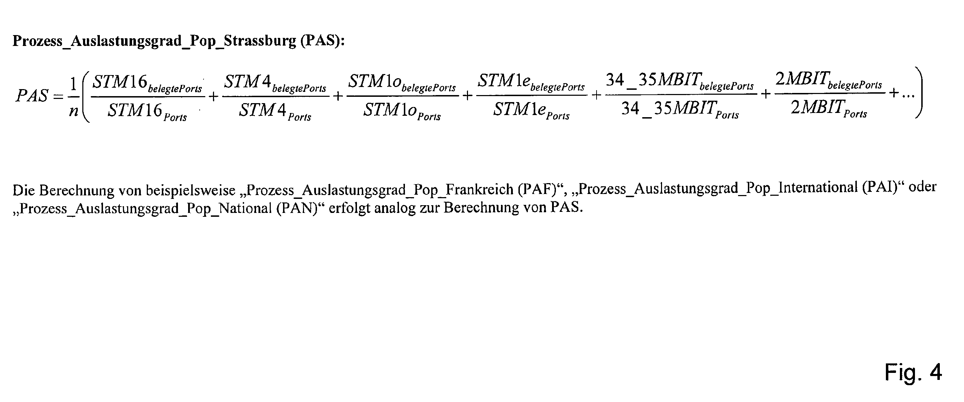

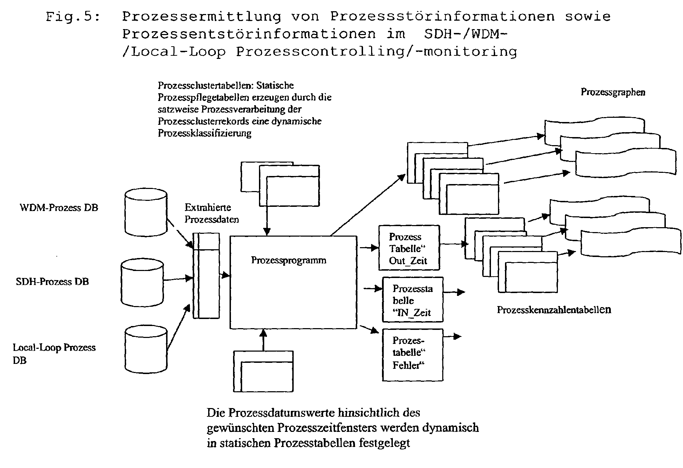

[Belegungsgrad_Statisch], [Belegungsgrad_Dynamisch] gehalten. Durch das satzweise Abarbeiten der statischen SDH-/WDM/Local-Loop Clustertabellen wird durch die geeignete Prozessattributwahl jede gewünschte Drilldown-Hierarchie, mittels [hinzufügen/entnehmen] von Rekords ermöglicht. Dies wiederum ermöglicht die einfache Berechnung des Belegungsgrades laut Fig. 3 und Fig. 4. Bei Änderungen in den SDH-/WDM/Local-Loop Datenbanktabellen können vorzugsweise Trigger für die automatische Kalkulationsanstoßung hinsichtlich des aktuellen Belegungsgrades verwendet werden. Dieses ermöglicht eine ständige Aktualisierung des Belegungsgrades. Im Übrigen sind alle benötigten Attribute, welche für die Berechnung laut Fig. 3 und Fig. 4 benötigt werden, natürlich in den statischen SDH-/WDM/Local-Loop Tabellen vorhanden und in die Clustertabellen eingepflegt worden. Es ist selbstverständlich, dass die Darstellung der ermittelten Kennzahlen hinsichtlich des Belegungsgrades in Zeitreihengraphen sowie kumulierten Zeitreihengraphen erfolgen kann und in den gewünschten Zeitfenstern mittels der gewünschten Datumswerte, die in statischen Pflegetabellen gehalten werden, erfolgt. Hierbei können die Zeitreihenauswertungen dynamisch eingestellt werden, wie in Fig. 5 gezeigt. Überdies können auch die Local-Loops (Kundenendleitungen hinsichtlich Prozessauslastung/- erweiterung) mit diesem System überwacht werden sowie die Fehlerbeseitigung angestoßen werden.

Da mit der Statistik-Eingabemaske die Ermittlung von Gesamteinheiten und belegten Einheiten sehr einfach durchzuführen ist, ist eine anschließende Auslastungsgradermittlung leicht vorzunehmen.

Insbesondere wird durch die Programmstruktur erreicht, dass vorhandene Stöbe-N Rekords nach deren Produktgruppenzugehörigkeit klassifiziert werden. Hierbei wurde das Problem von sich ständig ändernden Leitungsschlüsselzahlen sowie mit auftretenden Leitungsschlüsselzahlen, für die keine Zuordnung laut QNM-Zielvorgabe dokumentiert ist, gelöst. Für die Lösung dieses Problems wurde ein spezieller Algorithmus implementiert. Dieser hält die Leitungsschlüsselzahlen je Produktgruppe in statischen LSZ-Produktgruppentabellen. Das satzweise Abarbeiten der statischen LSZ-Produktgruppentabellen ermöglicht die Veränderung der Leitungsschlüsselzahlen (hinzufügen /entnehmen) in den LSZ-Produktgruppentabellen, und dies wiederum erzeugt eine dynamische Klassifizierung der Produktgruppen-Entstörungsrekords.

Natürlich muss eine Fehlererkennung bei Störungsrekords hinsichtlich nicht klassifizierbarer Leitungsschlüsselzahlen vorhanden sein. Dieses Problem löst man durch die Erkennung aller nicht klassifizierten Entstörrekords und deren Haltung in einer statischen Fehlertabelle. Der geschaffene Iterationsalgorithmus ermöglicht die Pflege und Zuordnung der in der statischen Fehlertabelle selektierten Leitungsschlüsselzahlen. Diese werden für die Pflege der vorhandenen statischen LSZ-Produktgruppentabellen verwendet und bringen eine vorteilhafte ständige Fehleroptimierung mit sich.

In einer vorteilhaften Erweiterung wird ein Algorithmus zur Quantisierung der Entstörrekords hinsichtlich deren Anzahl an Eingängen in der Regelarbeitszeit/außerhalb der Regelarbeitszeit sowie an Sonn/Feiertagen eingesetzt.

Überdies ist eine Abfrage enthalten zur Erfassung der Anzahl an Störungseingängen für die geforderten Servicezeiten. Alle ermittelten Kennzahlen werden automatisch in statischen Tabellen gehalten und stehen so für statistische Auswertungen hinsichtlich Personal und Zeitreihen zur Verfügung.

Auf der Basis dieser Informationen werden eine grafische Zeitreihendarstellung sowie eine grafisch kumulierte Zeitreihendarstellung für die zielrelevanten Entstörungsrekords implementiert, die für alle ermittelten Kennzahlen möglich ist.

Im Folgenden werden weitere vorteilhafte Module/Programme entwickelt, die die Quantisierung von Störungsrekords in einem Vierundzwanzig-Stundenraster hinsichtlich des Eingangszeitpunktes bei QNM-MNS ermöglichen. Alle ermittelten Kennzahlen werden automatisch in statischen Tabellen gehalten und stehen so für statistische Auswertungen hinsichtlich Personalbemessung und Zeitreihenanalysen zur Verfügung. Eine leichte Abänderung in diesem Modul ermöglicht die Ermittlung der Verweildauer im Kundenbereich und dies wiederum kann zur Optimierung der Verweildauer im Kundenbereich verwendet werden. Hierdurch kann ein Nachweis für eine nicht zu verantwortende Verzögerung im Entstörprozess QNM-MNS geführt werden.

Im Detail wurde das Problem durch die Erfindungen mit den Merkmalen der unabhängigen Ansprüche gelöst. Vorteilhafte Weiterbildungen der Erfindungen sind in den Unteransprüchen gekennzeichnet.

Im Einzelnen handelt es sich um ein Verfahren zur Darstellung oder Auswertung von Störinformationen und Entstörinformationen, die in einer ersten Datenbank (Stöbe-N) abgelegt sind. In einem ersten Schritt werden aus der ersten Datenbank Datenstrukturen aufgrund von Zeitangaben selektiert. In einem weiteren Schritt werden die so selektierten Datenstrukturen in einer zweiten Datenbank zwischengespeichert, die durch Indizierung auf eine Auswertung, insbesondere ein Clustering, optimiert ist. Im nächsten Schritt wird die so optimierte Datenbank nach Datenstrukturen durchsucht, die innerhalb eines vorgebbaren Zeitfensters entstört wurden, oder solchen, die nicht innerhalb des vorgegebenen Zeitfensters entstört wurden.

In einer bevorzugten Ausführungsform werden die Ergebnisse der Suche statistisch ausgewertet und grafisch dargestellt. Hierbei ist ein Clustering der Datenstrukturen nach Produktgruppen möglich, wobei die Produktgruppen in einer weiteren Datenbank gehalten werden, die dynamisch anpassbar ist. Durch einen Link bzw. Join kann eine Verknüpfung erfolgen.

Hierdurch kann der Entstörindex einfach als der Quotient aus der fristgerecht entstörten Fehlermeldung und der gesamten Anzahl der Fehlermeldungen berechnet werden.

Weitere Suchkriterien sind hierbei ohne weiteres zu berücksichtigen, wie z. B. ein weiteres Zeitfenster.

Durch den Abgleich der geclusterten Datenstrukturen mit denen, die nicht in Clustern sind, ergeben sich somit die nicht selektierten Datenstrukturen, die einer Überprüfung bedürfen.

Ein weiterer Teil der Erfindung sind eine Vorrichtung und eine Software, die das erfindungsgemäße Verfahren ausführen.

Im Folgenden wird die Erfindung anhand von Ausführungsbeispielen näher erläutert, die in den Figuren schematisch dargestellt sind. Im Einzelnen zeigt:
- Fig. 1: einen Datenflussplan;
- Fig. 2: Aufbau eines Netzwerkes mit einem SDH, der wiederum mit anderen Netzwerkkomponenten verbunden ist;
- Fig. 3: internationales Netzwerk mit nationalen Netzknoten sowie deren Berechnung;
- Fig 4: eine Formel für die Berechnung des Auslastungsgrades eines internationalen Netzwerks;
- Fig. 5:: das Ermitteln von Störinformationen sowie Entstörinformationen in der SDH-/WDM-/Local-Loop Überwachung;

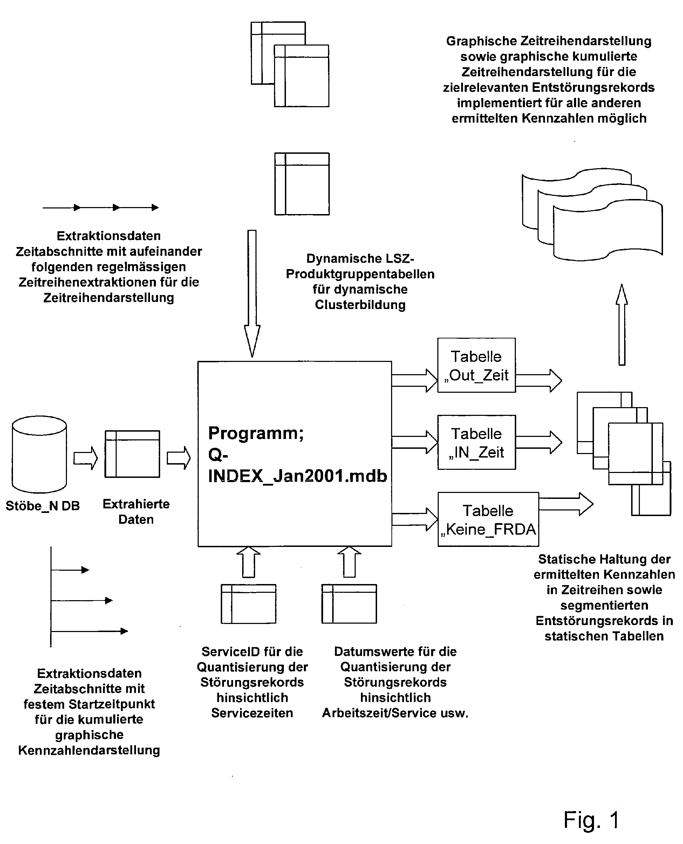

Die Figur 1 zeigt das erfindungsgemäße Verfahren in einer sehr hohen Detailtreue. Die Zeichnung ist selbstsprechend, sodass weitere Erklärungen nicht notwendig sind. Im Wesentlichen wird das Verfahren ausgeführt, das in Anspruch 1 beschrieben wurde. Es wird darauf hingewiesen, dass die ServiceID für die Quantisierung der Störungsrekords hinsichtlich der Serverseite dynamisch festgelegt werden kann. Das gleiche gilt für die Datumswerte, die ebenfalls dynamisch einstellbar sind.

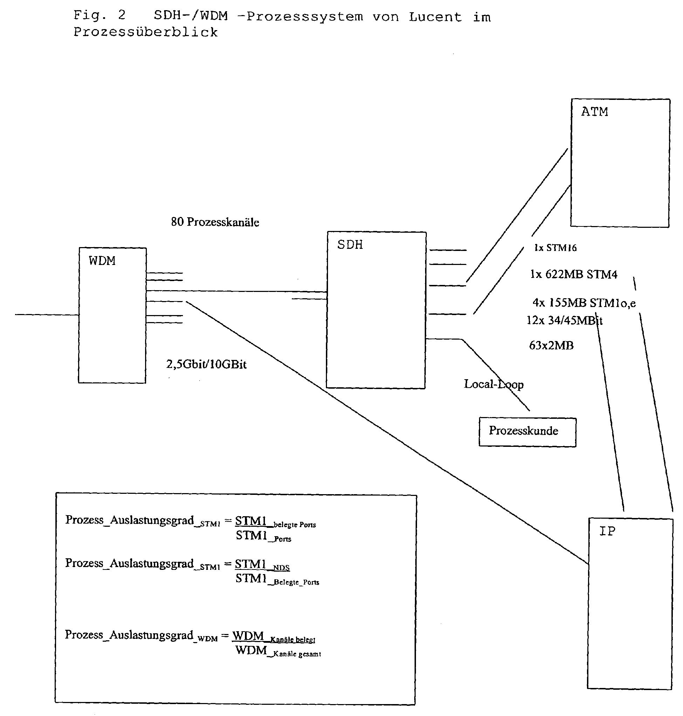

Fig. 2 zeigt ein Netzwerk von unterschiedlichen Netzknoten, wobei es sich um ATM, IP, WDM und SDH-Knoten handelt. Diese sind über Leitungen mit unterschiedlichen Protokollen verbunden. Dieser Anschluss bildet hierbei einen Prot. Ein Port ist immer dann belegt, wenn Daten über ihn übertragen werden. Bei der Bestimmung des dynamischen Auslastungsgrades wird das Verhältnis der Auslastung eines belegten Ports zu allen belegten Ports bestimmt. Hierbei wird gemessen, wie hoch die tatsächliche Auslastung eines belegten Ports ist. Diese kann sich aus dem Verhältnis der maximal möglichen Transferleistung zum tatsächlich geleisteten Transfer ergeben.

Die Figuren 4 und 3 zeigen die Bestimmung eines Auslastungsgrades für ein weltweites Netzwerk. Die Figur 3 zweigt die Relationen in einer grafischen Form. Die Figur 4 zeigt die Bestimmung in einer mathematischen Formel. Die weiteren Figuren sind selbstsprechend oder wurden bereits oben abgehandelt.

## Patentansprüche

1. Verfahren zur Darstellung und/oder Auswertung von Störinformationen und Entstörinformationen, die in einer ersten Datenbank (Stöbe-N) abgelegt sind,
- mit einem Schritt, bei dem aus der ersten Datenbank Datenstrukturen aufgrund von Zeitangaben selektiert werden,
- mit einem weiteren Schritt, bei dem die so selektierten Datenstrukturen in einer zweiten Datenbank zwischengespeichert werden, die durch Indizierung auf eine Auswertung optimiert ist,
- mit einem weiteren Schritt, bei dem die so optimierte Datenbank nach Datenstrukturen durchsucht wird, die Informationen über Störungen enthalten, welche innerhalb eines vorgebbaren Zeitfensters entstört wurden, und solchen, die Informationen über Störungen enthalten, welche nicht innerhalb des vorgegebenen Zeitfensters entstört wurden, wobei eine Störung dann vorliegt, wenn eine Auslastung einen Schwellenwert übersteigt,
**dadurch gekennzeichnet,**
**dass** die Auslastung sowohl durch einen statischen als auch dynamischen Auslastungsgrad bestimmt wird, und sich ein statischer Auslastungsgrad aus dem Verhältnis von belegten Ports zu den Gesamtports eines Geräts in einer Vermittlungsstelle und der dynamische Auslastungsgrad aus dem Verhältnis der maximal möglichen Transferleistung zur tatsächlich geleisteten Transferleistung der belegten Ports in einer Vermittlungsstelle bestimmt, wobei die Auslastung durch einen Maximalwert normalisiert wird.

2. Verfahren nach Anspruch 1, **dadurch gekennzeichnet, dass** die Auslastung einer Vielzahl von Vermittlungsstellen zusammengefasst und normiert wird, wobei die Zusammenfassung durch eine Addition und die Normierung durch eine Division erfolgt, wobei die unterschiedlichen zu vergleichenden Dimensionen beliebig mit einem gemeinsamen Prozessfaktor gestreckt werden können.

3. Verfahren nach einem oder mehreren der vorhergehenden Ansprüche, **dadurch gekennzeichnet, dass** die Ergebnisse der Suche statistisch ausgewertet werden und, insbesondere grafisch, dargestellt werden.

4. Verfahren nach einem oder mehreren der vorhergehenden Ansprüche, **dadurch gekennzeichnet, dass** ein Clustering der Datenstrukturen nach Produktgruppen möglich ist.

5. Verfahren nach einem oder mehreren der vorhergehenden Ansprüche, **dadurch gekennzeichnet, dass** eine dritte Datenbank vorhanden ist, in der Produktgruppen dynamisch ablegbar sind, die durch eine Verknüpfung bei der Suche einbezogen werden.

6. Verfahren nach einem oder mehreren der vorhergehenden Ansprüche, **dadurch gekennzeichnet, dass** ein Entstörindex der Quotient aus der fristgerecht entstörten Fehlermeldung und der gesamten Anzahl der Fehlermeldungen ist.

7. Verfahren nach einem oder mehreren der vorhergehenden Ansprüche, **dadurch gekennzeichnet, dass** bei der Suche ein weiteres Zeitfenster als Suchkriterium bestimmt werden kann.

8. Vorrichtung, bestehend aus einem oder mehreren Rechnersystemen, zur Darstellung und/oder Auswertung von Störinformationen und Entstörinformationen, **gekennzeichnet durch** so eingerichtete Mittel, die den Ablauf eines Prozesses erlauben, der ein Verfahren nach einem oder mehreren der vorhergehenden Ansprüche implementiert.

9. Vorrichtung nach Anspruch 8, **gekennzeichnet durch** eine Bearbeitungseinheit als Mittel um vom ersten Speicherbereich Datenstrukturen aufgrund von Zeitangaben zu selektieren, der eingerichtet ist, um diese Information auf den zweiten Speicherbereich zu schreiben, um Zugriffsstrukturen, insbesondere Indexe, anzulegen, die ausgebildet sind, um einen Clusterzugriff zu erlauben, um mittels der Bearbeitungseinheit die so optimierte Datenbank nach Datenstrukturen zu durchsuchen, vorgebbaren Zeitfensters entstört die innerhalb eines wurden, und/oder solchen, die nicht innerhalb des vorgegebenen Zeitfensters entstört wurden.

10. Computerprogramm, **dadurch gekennzeichnet, dass** es beim Ablauf auf einem Computer das Verfahren nach einem der Ansprüche 1 bis 8 ausführt.

11. Datenträger, **dadurch gekennzeichnet dass** auf dem Datenträger eine Datenstruktur gespeichert ist, die nach einem Laden in einen Hauptspeicher eines Computers das Verfahren nach einem der Ansprüche 1 bis 8 ausführt.

## Claims

1. Method for presenting and/or evaluating of interference information and interference elimination information stored in a first database (Stöbe-N),
- with a step, where data structures are selected from the first database on the basis of time data,
- with a further step, where such selected data structures are temporarily stored in a second database which is optimized for evaluation by indexing,
- with a further step, where such optimized database is searched for data structures containing information on interferences which have been eliminated within a settable time window und those containing information on interferences which have not been eliminated within the set time window, wherein an interference is present when an utilization exceeds a threshold value,
**characterized in that** the utilization is determined by a static as well as a dynamic utilization rate and that a static utilization rate is determined by the ratio of occupied ports to the total ports of a device in a switching center and the dynamic utilization rate is determined by the ratio of the maximum possible transfer performance to the actual achieved transfer performance of the occupied ports in a switching centre, wherein the utilization is normalized by a maximum value.

2. Method according to claim 1, **characterized in that** the utilization of a plurality of switching centres is summarized and normalized, wherein the summarization happens by addition and the normalization happens by division, wherein the different dimensions to be compared can be arbitrary stretched by a common process factor.

3. Method according to one or more of the preceding claims, **characterized in that** the search results are evaluated statistically and especially presented graphically.

4. Method according to one or more of the preceding claims, **characterized in that** clustering of the data structures according to product groups is possible.

5. Method according to one or more of the preceding claims, **characterized in that** a third database is present in which product groups can be stored dynamically, which can be included in the search by a linkage.

6. Method according to one or more of the preceding claims, **characterized in that** an interference elimination index is the quotient of the timely eliminated error report and the total number of error reports.

7. Method according to one or more of the preceding claims, **characterized in that** in the search another time window can be determined as search criterion.

8. Device consisting of one or more computer systems for presenting and/or evaluating of interference information and interference elimination information, **characterized by** means arranged to allow the execution of a process implementing a method according to one or more of the preceding claims.

9. Device according to claim 8, **characterized by** a processing unit as a means for selecting data structures from the first storage area based on time data, which is established to write this information on the second storage area to create access structures, in particular indices, constructed to allow cluster access to search such optimized database for data structures by means of the processing unit, which have been eliminated within a settable time window and/or ones which have not been eliminated within the set time window.

10. Computer program, **characterized in that** upon execution on a computer, it performs the method according to any one of claims 1 to 8.

11. Data carrier, **characterized in that** a data structure is stored on the data carrier which, after loading in a main storage of a computer, performs the method according to any one of claims 1 to 8.

## Revendications

1. Procédé destiné à représenter et/ou à évaluer des informations de panne et des informations de dépannage qui sont sauvegardées dans un première base de données (Stöbe-N),
- avec une étape lors de laquelle, à partir de la première base de données, des structures de données sont sélectionnées à partir d'indications temporelles,
- avec une étape supplémentaire, lors de laquelle les structures de données ainsi sélectionnées sont temporairement mémorisées dans une deuxième base de données, qui par indexation est optimisée pour une évaluation,
- avec une étape supplémentaire, lors de laquelle la base de données ainsi optimisée est explorée au niveau de structures de données qui contiennent des informations de pannes lesquelles ont été dépannées dans une fenêtre de temps prédéfinissable et celles qui contiennent des informations de pannes, lesquelles n'ont pas été dépannées dans la fenêtre de temps prédéfinie, une panne étant présente dès lors qu'un taux d'utilisation dépasse une valeur seuil,
**caractérisé en ce que** le taux d'utilisation est déterminé aussi bien par un taux d'utilisation dynamique que par un taux d'utilisation statique et un taux d'utilisation statique est déterminé à partir du rapport de ports occupés à la totalité des ports d'un appareil dans un central public et le taux d'utilisation dynamique est déterminé à partir du rapport de la puissance de transfert maximale possible à la puissance de transfert effective assurée par les ports occupés dans un central public, le taux d'utilisation étant normalisé par une valeur maximale.

2. Procédé selon la revendication 1, **caractérisé en ce que** le taux d'utilisation d'une pluralité de centraux publics est regroupé et normalisé, le regroupement s'effectuant par une addition et la normalisation s'effectuant par une division, les différentes dimensions à comparer pouvant être étendues à volonté avec un coefficient de processus commun.

3. Procédé selon l'une quelconque ou plusieurs des revendications précédentes, **caractérisé en ce que** les résultats de la recherche sont évalués par statistiques et représentés, notamment par graphiques.

4. Procédé selon l'une quelconque ou plusieurs des revendications précédentes, **caractérisé en ce qu'**une classification des structures de données par groupes de produits est possible.

5. Procédé selon l'une quelconque ou plusieurs des revendications précédentes, **caractérisé en ce qu'**une troisième base de données est présente, dans laquelle des groupes de produits qui lors de la recherche sont impliqués par chaînage peuvent être sauvegardés de manière dynamique.

6. Procédé selon l'une quelconque ou plusieurs des revendications précédentes, **caractérisé en ce qu'**un indice de dépannage est le quotient du message de panne dépanné dans les délais et du nombre total de messages de panne.

7. Procédé selon l'une quelconque ou plusieurs des revendications précédentes, **caractérisé en ce que** lors de la recherche, il peut être déterminé une fenêtre de temps supplémentaire en tant que critère de recherche.

8. Dispositif, constitué d'un ou de plusieurs systèmes informatiques, pour la représentation et/ou l'évaluation d'informations de panne et d'informations de dépannage, **caractérisé par** des moyens aménagés de sorte à permettre le déroulement d'un processus qui implémente un procédé selon l'une quelconque ou plusieurs des revendications précédentes.

9. Dispositif selon la revendication 8, **caractérisé par** une unité de traitement en tant que moyen pour sélectionner à partir de la première zone de mémoire des structures de données sur la base d'indications temporaires, qui est aménagé pour écrire lesdites informations dans la deuxième zone de mémoire pour créer des structure d'accès, notamment des indices, qui sont conçues pour permettre une classification pour explorer à l'aide de l'unité de traitement la base de données ainsi optimisée par structures de données qui ont été dépannées dans la fenêtre de temps prédéfinissable et/ou celles qui n'ont pas été dépannées dans la fenêtre de temps prédéfinie.

10. Programme informatique, **caractérisé en ce que** lors de son exécution sur un ordinateur, il réalisé le procédé selon l'une quelconque des revendications 1 à 8.

11. Support de données, **caractérisé en ce que** sur le support de données est mémorisée une structure de données, qui après un chargement dans une mémoire principale d'un ordinateur, réalise le procédé selon l'une quelconque des revendications 1 à 8.
